# EUROPEAN PATENT SPECIFICATION

(11) **EP 3 000 749 B1**
(45) Date of publication and mention of the grant of the patent: **19.07.2017**
(21) Application number: 15382460.2
(22) Date of filing: 23.09.2015
(51) Int. Cl.: B65D 81/24, C12H 1/22

(54) **FLOATING DEVICE WHICH IS INSTALLABLE AS A COVER ON CONTAINERS FOR THE "ALWAYS-FULL" TECHNIQUE**
SCHWIMMENDE VORRICHTUNG ZUR INSTALLATION ALS ABDECKUNG EINES BEHÄLTERS FÜR DIE "ALWAYS-FULL -TECHNIK"
DISPOSITIF FLOTTANT QUI PEUT ÊTRE INSTALLÉ SOUS LA FORME D'UN REVÊTEMENT SUR DES RÉCIPIENTS POUR LA TECHNIQUE "TOUJOURS PLEIN"

(30) Priority: 26.09.2014 ES 201431418
(43) Date of publication of application: 30.03.2016
(73) Proprietor: Parcitank, S.A., 02600 Villarrobledo (ES)
(72) Inventor: PARRA CEBRIAN, Vicente, 02600 Villarobledo (ES)
(74) Representative: Baños Treceño, Valentín

(56) References cited:
- EP-A1- 1 801 037
- CN-U- 201 647 378
- FR-A- 1 541 092
- FR-A1- 2 627 467
- US-A- 2 014 264
- US-A- 4 723 674

## Description

### OBJECT OF THE INVENTION

The present specification defines a device consisting of a floating and inflatable cover which is intended to prevent the oxidation of a liquid element such as wine, oil or similar, when the latter is stored inside a container or tank with fixed capacity and in which the volume of the liquid is generally variable, therefore the liquid is in contact with the air and is oxidised when the volume of the liquid is lower than the capacity of the container. The present invention defines a floating and inflatable cover made of plastic material for food use, consequently it is flexible, rollable and foldable, in addition to allowing it to be reusable on different containers or tanks.

The invention is especially suitable for being used on containers or tanks for storing wine, but is equally applicable to other liquid products which must be preserved from the air in order to not lose their properties such as oil, milk or others.

### BACKGROUND OF THE INVENTION

The preferred scope of application of the invention is for wine cellars and with reference thereto, the evolution which the production of wine has undergone over time, in part as a consequence of the needs which have been arising from the use of new containers for the storage thereof, it is one of the aspects for which, today, the modernisation of the production process has been improved.

In old estates and diverse cellars when the remains of wine, which remained from the movement of wine between the different containers, had to be stored, these estates and cellars had different types of containers with different capacities, which allowed different volumes of wine to accumulate in each one of them. In this way, the wine was stored with the absence of oxygen, avoiding the oxidation thereof, but the quality of the wine reduced and the mixture of different types of wines also fermented in this process. At present, in large cellars, this type of organisation, termed racking, continues to be used, but in the search for more specific characteristics of the wine and with the intention to improve the analytic quality controls, other systems, which also prevent the oxidation of the wine, have been developed without having to transport it between different tanks, which is defined as the "always-full" technique, in which two principles stand out, which are the inclusion in the containers of inert gases and the installation in the containers of devices with floating roofs.

The techniques, which make reference to the inertisation system such as for example those reflected in the patents ES 2225942 of Gaubert Gui or the patent GB2330761 of Safeway stores, have in common that they consist of the introduction of an inert gas inside a tank or container at a minimum pressure with the aim of this gas occupying the volume of air or oxygen which is between the container and the liquid, displacing the air towards the exterior by means of an automatic system and maintaining the inert gas inside the container at a certain minimum pressure, making it impossible for oxygen or air to enter which produces the oxidation of the liquid. This system, although it is used by different operations, has the disadvantage of having a high operational cost due to the consumption of these inert gases (generally nitrogen), in addition to the need for a fixed piping installation which goes from each one of the containers in which it is desired to install a block for gas bottles. As a consequence, it is not the method mostly used due to the service cost thereof and the problems of water-tightness which are required.

In terms of the technique consisting of floating roofs, these are solutions which are based on the installation in tanks and containers of a fixed device consisting of a floating roof which is slid through the interior of the container until it is located on top of the liquid, thus avoiding air remaining between the cover and the liquid. We point out the patent US2330366 of David W. Jayne in which the container has a metallic central guide byway of which a rigid metallic cover is vertically is slid; the patent US4723674 of Morris A. Nunes, which defines a rigid and solid cover with a flexible end for being used in tanks for food products; or the patent ES0213739 of Demiano Gallo in which an assemblable roof for tanks is defined, which forms a non-slip, foldable rigid element which is preferably usable in containers without a cover. It is true that these solutions intend to solve the problem of the oxidation of the liquid, meanwhile they have problems derived from the rigid structure of the roofs itself, which makes them heavy which makes the manoeuvrability of the roof difficult, it does not ensure the perfect coupling to the surface of the liquid and therefore the water-tightness of the assembly, given that it requires additional elements which are expensive and difficult to install and following on from the problems of manoeuvrability, the existing devices today make it impossible for them to be able to be reused on other containers.

In this point, it is considered the document CN201647378U as the closer prior art. This invention defines a body that can be used to prevent the contact of the air with the oil in a tank, where the pad body is a similar circular cake-shaped object capable of floating on an oil surface and where the mat body can be manually handled, containing the mat body a bubble film that allows the device to float over the oil. However, this prior art is not inflated by means of a compressor as in the present patent application so that the hermetic seal of the tank is not assured; and in order maintain the bases of the body stable and flat when it is inflated, the present patent application present internal spacer threads or tensors.

The inventive object of this patent solves all these preceding problems of the existing covers or roofs, given that it has a floating inflatable cover, which is easily introducible into or removable from the container given that it weighs little and can be introduced through the access mouth already existing in the containers, and this also allows it to be reusable on other containers; this manoeuvrability allows it to be cleaned correctly, efficiently and in a simple manner; it is a cover or floater which allows a perfect coupling on the water line, given that, thanks to internal tensors or threads, the contact surface is perfectly flat and allows the assembly of the cover or floater not to bulge, the faces thereof remaining rigid, and upon being inflated, it allows the lateral coupling with the walls of the tank to also be perfect, and therefore the volume of air in contact with the liquid is negligible. Due to all of this, this invention constitutes a clear technical advance with respect to the covers used in the "always-full" techniques.

### DESCRIPTION OF THE INVENTION

The device consisting of a floating and inflatable cover, which we can define it as, or as a roof or as a floater, which is manually introduced in any type of liquid storage tank or container, preferably in the field of foodstuffs and which is simply inflated by means of a compressor. This is placed or floated on the surface of the liquid and therefore eliminates the possibility of the liquid volume being in contact with air.

The floating cover or floater, as has been mentioned is inflatable, is composed of a plastic material for food use, such as for example PVC, in the interior of which threads or tensors are located which allow the body of the floater to be made rigid when it is inflated. This floater is therefore a woven three-dimensional structure, the two base fabrics of which are interrelated with numerous spacer threads and given that each spacer thread has the same length, a maximum distance between the two base or contour fabrics is maintained or defined. In this way, when the hollow body is filled with the air coming from the compressor, the tensor threads and the contour guarantee the obtaining and maintaining of the desired form, being a dimensionable and stable body which is fixed to the lateral walls of the container and maintains the two upper and lower faces thereof flat without risking bulging.

The floating cover, when it is not inflated, as it is made of plastic material, weighs little, it is flexible and therefore rollable and foldable, which allows it to be manually introduced into or removed from the body of the container by means of a cable or rope through any opening in the walls of the container or simply through the upper mouth designed in the containers. This makes this floating cover reusable on other containers, equally allowing the cleaning thereof so that there is no type of interaction between different types of wine or other liquid foodstuffs or non-foodstuffs which can be oxidised upon contact with the air.

In turn, the floating cover, which when it is inflated the lower face thereof is smooth, is provided, on the upper face thereof, with a series of sealing and fixing elements, which are:
- handles to improve the manual handling of the cover when it is deflated, 2 being the optimal number of handles;
- an air intake, either for the inlet or for the outlet of air, which allows it to be connected to a compressor by means of a hose or plastic tube, which is recommend with a manometer which regulates the internal pressure of the floater;
- and a plurality of rings on which a rope or cable is fixed or rolled and allow, not only the vertical introduction or removal movement of the floater when it is deflated, but also allow the handling or levelling of the floater for correct inflation; the number of rings being between 3 and 12, depending on the diameter of the container.

Another aspect of the invention is that the floating device described here is provided with an aerator, preferably in the central area of the floater and which can be detachable.

Additionally, a continuous air supply line can be provided so that the pressure of the device is constant, and therefore, when the pressure is constant, the floater or floating cover does not lose the configuration or form once time passes.

Lastly, it is indicated that this device is free from anchoring elements or fixing type elements in the tank.

In order to complete the description and with the aim of aiding a better understanding of the characteristics of the invention, a set of drawings are enclosed as an integral part of said description, in which, in an illustrative and non-limiting manner, the following is represented:
Fig.1 represents the section in elevation of the floating cover when it is inflated.
Fig. 2 represents the plan of the floating cover.
Fig. 3 represents a section of the elevation of the floating cover inside a container with a determined volume of liquid, in which the floating cover is inflated.
Fig. 4 represents a section of the elevation of the floating cover inside a container without liquid, in which the floating cover is deflated and therefore can be displaced vertically for the removal thereof.
Fig. 5 represents a section of the elevation of the floating cover inside a container according to fig. 4, in which the removal through the upper mouth of the container of said deflated floating cover is represented.

### DESCRIPTION OF THE DRAWINGS

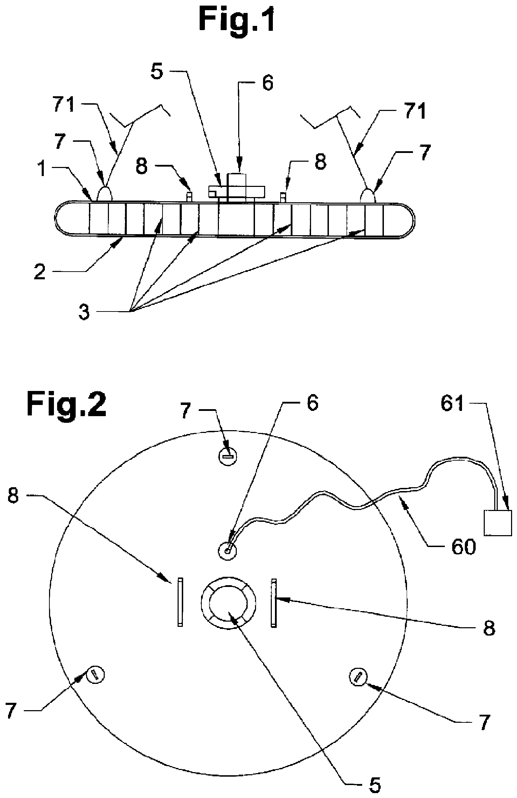

In fig. 1 and fig. 2, the floating cover or floater is represented, which is composed of a plastic material for food use, which is a woven three-dimensional structure, the two base fabrics of which, upper (1) and lower (2), which delimit the contour, are interrelated with numerous spacer threads (3) or tensors in the interior thereof, which allow the body of the floater to be made rigid when it is inflated. In this way, upon filling the hollow body with air coming from the compressor, the tensor threads (3) guarantee the obtaining and maintaining of the desired form, being a dimensionable and stable body which is fixed to the lateral walls of the container (4) and maintains the upper and lower (1 and 2) faces thereof flat without the risk of bulging. As can also be observed in these figures, and especially in fig. 2, this floating cover is provided, on the upper face thereof (1), with a series of sealing and fixing elements, which are two handles (8) for improving the manual handling of the cover when it is deflated; an air intake (6), either for the inlet or for the outlet of air, which allows it to be connected to a compressor (61) by means of a hose (60) or plastic tube, which is recommended with a manometer which controls the internal pressure of the floater; a plurality of rings (7) which in this case are 3, on which a rope (71) or cable is fixed by means of rolling, clamping or similar and allow not only the vertical introduction or removal movement of the floater when it is deflated, but also allows the handling and/or levelling of the floater for correct inflation. In this set of figures, an aerator (5) has also been included, which is optional and which in this case is located in the central area of the floater, said aerator being detachable.

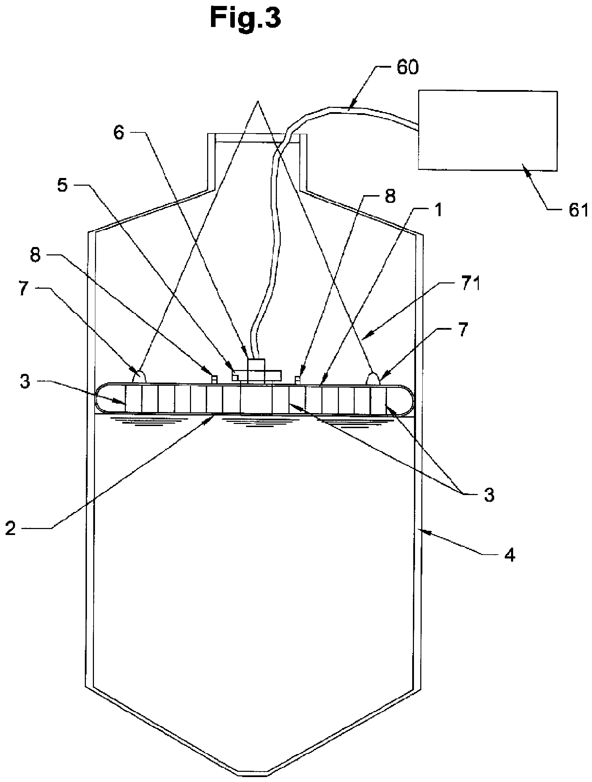

In fig. 3, it is observed how, upon the hollow body of the floater being filled with the air coming from the compensator (61), the hose (60) being able to be introduced through the upper mouth of the container (4), the thread tensors (3) guarantee the obtaining and maintaining of the desired form, the floater being stable and being fixed to the lateral walls of the container (4) and maintaining the two upper and lower faces thereof (1 and 2) flat without the risk of bulging, and specifically it is observed how the lower face (2) or base is flat and at the level of the volume of liquid, not allowing there to be volume of air between the floating cover and the volume of liquid.

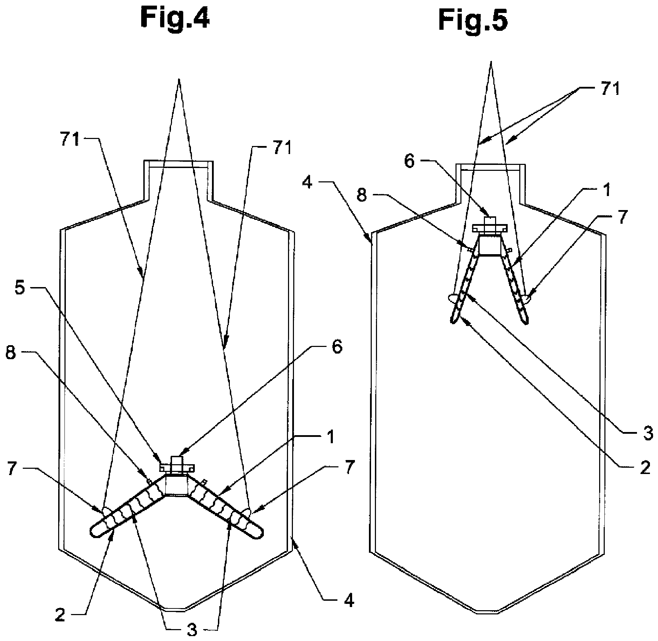

In fig. 4 and fig. 5, the ease of handling of said floating cover is observed, in this case when the container of liquid is empty. For this, the cover has been previously deflated and therefore with the cover being deflated and the separator threads (3) or tensors not being rigid, the assembly of the cover is flexible and is rollable, which allows it to be manually introduced into or removed from the body of the container by means of a cable (71) or a rope fixed to the handles (7) through any opening in the walls of the container or simply through the upper mouth designed in the containers (4).

With the nature of the invention being sufficiently described in the foregoing, taking into account that the terms which have been written in this specification must be taken in a broad and non-limiting sense, as well as the description of the manner of carrying it out in practice, and demonstrating that it constitutes a positive technical advance which is why it is requested to register the patent; what constitutes the essence of the invention referred to is specified in the following claims below.

## Claims

1. A floating device which is installable as a cover on containers for the "always-full" technique, which is reusable on different containers which contain liquids, being principally usable on storage containers or tanks for liquid foodstuff, which consists of a floating cover or roof made of plastic material for food use and it is manually operable from the exterior with handles (8), wherein it is a woven three-dimensional structure which is inflatable and foldable, where the upper (1) and lower (2) fabric bases thereof are interrelated internally with spacer threads (3) or tensors of the same length that maintains these two bases flat and stable when it is inflated, the lower base always being in direct contact with the liquid foodstuff in use, wherein in the upper base (1) thereof there is provided an air intake (6) which allows it to be connected to a compressor (61) by means of a hose (60), it has an aerator (5), and a plurality of fixing rings (7) for a rope (71) or cable.

2. The floating device which is installable as a cover on containers for the "always-full" technique, according to claim 1, in which the number of rings (7) is **characterised in that** it is in the range between 3 and 12.

3. The floating device which is installable as a cover on containers for the "always-full" technique, according to claim 1, in which the aerator (5) is **characterised in that** it is detachable and is located in the central area.

## Patentansprüche

1. Schwimmende Vorrichtung, welche als eine Abdeckung bei Behältern für die "always full"-Technik installiert werden kann, welche bei verschiedenen Behältern verwendet werden kann, welche Flüssigkeiten enthalten, die hauptsächlich bei Aufbewahrungsbehältern oder Tanks für flüssige Nahrungsmittel verwendet werden kann, welche aus einer schwimmenden Abdeckung bzw. einem schwimmenden Dach besteht, die bzw. das aus Kunststoffmaterial hergestellt ist, zur Verwendung bei Nahrungsmitteln, und manuell von außen mit Handgriffen (8) bedient werden kann, wobei sie eine gewebte dreidimensionale Struktur ist, welche aufblasbar und zusammenfaltbar ist, wo der obere (1) und untere (2) Stoffboden davon im Inneren mit Abstandshaltergewinden (3) bzw. Spannelementen mit derselben Länge verbunden sind, die diese beiden Böden flach und stabil halten, wenn sie aufgeblasen wird, wobei der untere Boden stets in direktem Kontakt zu den flüssigen Nahrungsmitteln im Gebrauch steht, wobei in dem oberen Boden (1) davon ein Lufteinlass (6) vorgesehen ist, welcher ermöglicht, diesen durch einen Schlauch (60) mit einem Kompressor (61) zu verbinden, wobei sie einen Lüfter (5) und mehrere Befestigungsringe (7) für ein Seil (71) oder Kabel aufweist.

2. Schwimmende Vorrichtung, welche als eine Abdeckung bei Behältern für die "always full"-Technik installiert werden kann, nach Anspruch 1, bei welcher die Anzahl an Ringen (7) **dadurch gekennzeichnet ist, dass** sie in dem Bereich zwischen 3 und 12 liegt.

3. Schwimmende Vorrichtung, welche als eine Abdeckung bei Behältern für die "always full"-Technik installiert werden kann, nach Anspruch 1, bei welcher der Lüfter (5) **dadurch gekennzeichnet ist, dass** er abnehmbar ist und in dem zentralen Bereich liegt.

## Revendications

1. Dispositif flottant qui peut être installé comme couvercle sur des conteneurs pour la technique « toujours-plein », qui est réutilisable sur différents conteneurs qui contiennent des liquides, étant principalement utilisable sur des conteneurs ou réservoirs de stockage pour des produits alimentaires liquides, qui consiste en un couvercle ou toit flottant fait en matière plastique pour une utilisation alimentaire et qui peut fonctionner manuellement depuis l'extérieur avec des poignées (8), dans lequel il y a une structure tridimensionnelle tissée qui est gonflable et repliable, où les bases de tissu supérieure (1) et inférieure (2) de celle-ci sont étroitement liées à l'intérieur avec des fils espaceurs (3) ou tenseurs de la même longueur qui maintiennent ces deux bases plates et stables lorsqu'elle est gonflée, la base inférieure étant toujours en contact direct avec les produits alimentaires liquides utilisés, dans laquelle la base supérieure (1) de celle-ci est pourvue d'une entrée d'air (6) qui lui permet d'être reliée à un compresseur (61) au moyen d'un tuyau (60), elle a un aérateur (5), et une pluralité d'anneaux de fixation (7) pour une corde (71) ou câble.

2. Dispositif flottant qui peut être installé comme couvercle sur des conteneurs pour la technique « toujours-plein », selon la revendication 1, dans lequel le nombre d'anneaux (7) est **caractérisé en ce qu'**il est dans la plage entre 3 et 12.

3. Dispositif flottant qui peut être installé comme couvercle sur des conteneurs pour la technique « toujours-plein », selon la revendication 1, dans lequel l'aérateur (5) est **caractérisé en ce qu'**il est détachable et est situé dans la zone centrale.
